(19) **Europäisches Patentamt / European Patent Office / Office européen des brevets**

(11) **EP 4 725 911 A1**

(12) **EUROPEAN PATENT APPLICATION**

(43) Date of publication:
**15.04.2026 Bulletin 2026/16**

(21) Application number: **25206185.8**

(22) Date of filing: **01.10.2025**

(51) International Patent Classification (IPC):
*C01G 53/42* (2025.01)     *C01G 53/84* (2025.01)
*H01M 4/525* (2010.01)

(52) Cooperative Patent Classification (CPC):
**C01G 53/84; C01G 53/42; H01M 4/366;**
**H01M 4/525;** C01P 2002/52; C01P 2002/60;
C01P 2002/85; C01P 2004/03; C01P 2004/04;
C01P 2004/20; C01P 2004/32; C01P 2004/50;
C01P 2004/51; C01P 2004/61; C01P 2004/80;
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.10.2024 KR 20240138902**

(71) Applicant: **SAMSUNG SDI CO., LTD.**
**Yongin-si, Gyeonggi-do 17084 (KR)**

(72) Inventors:
• **CHOO, Sungho**
  **17084 Yongin-si (KR)**
• **CHANG, Donggyu**
  **17084 Yongin-si (KR)**
• **JANG, Jungsue**
  **17084 Yongin-si (KR)**
• **AN, Jisang**
  **17084 Yongin-si (KR)**
• **PARK, Jingyu**
  **17084 Yongin-si (KR)**
• **LEE, Jiho**
  **17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIALS, PREPARATION METHODS THEREOF, POSITIVE ELECTRODES, AND RECHARGEABLE LITHIUM BATTERIES**

(57)     A positive electrode active material includes: core particles including a lithium nickel-based composite oxide having a nickel content (e.g., amount) of at least about 80 mol% based on 100 mol% of a total metal excluding lithium in the lithium nickel-based composite oxide; and a coating layer disposed on a surface of each core particle and including aluminium, wherein the core particles are each in a form of a secondary particle in which a plurality of primary particles is agglomerated, an aluminium content (e.g., amount), based on total 100 at% of nickel, cobalt, and aluminium is about 10 at% to about 15 at% as measured by energy profiling energy dispersive spectroscopy (EP-EDS) on a surface of a positive electrode active material particle including the core particle and the coating layer.

FIG. 5

S4800 5.0kV 7.7mm x20.0k SE(M)     2.00um

**(Cont. next page)**

(52) Cooperative Patent Classification (CPC): (Cont.)
C01P 2004/84; C01P 2004/86; C01P 2006/40;
H01M 2004/028

**Description**

**BACKGROUND**

**1. Field**

One or more embodiments of the present disclosure relate to positive electrode active materials, preparation methods thereof, positive electrodes including the same, and rechargeable lithium batteries including such electrodes.

**2. Description of the Related Art**

Rechargeable lithium batteries are widely used as power sources in portable information devices (such as cell phones, laptop computers, smart phones, and/or the like) and/or electric vehicles. These batteries are favored for their high energy density and portability. Recently, significant research has been directed toward enhancing the performance of rechargeable lithium batteries for use in hybrid or electric vehicles, as well as in energy storage systems (ESS) and residential power storage units such as power walls.

Various positive electrode active materials have been investigated to realize rechargeable lithium batteries for applications to such uses. Among them, lithium nickel-based oxides, lithium nickel manganese cobalt-based composite oxides, lithium nickel cobalt aluminium-based composite oxides, and lithium cobalt-based composite oxides are primarily used as positive electrode active materials. Recently, with the rapidly increasing demand for large-sized, high-capacity, and/or high-energy-density rechargeable lithium batteries, there is a need and desire to develop positive electrode active materials that concurrently (e.g., simultaneously) improve stability and performance.

**SUMMARY**

One or more aspects of embodiments of the present disclosure are directed toward a positive electrode active material including a lithium nickel-based composite oxide and a coating layer. By introducing such an enhanced (e.g., optimal or improved) coating layer, the performance of a rechargeable lithium battery - such as capacity characteristics, initial charge/discharge efficiency, and cycle-life characteristics under high temperature and high voltage conditions - is improved. Additional aspects will be set forth in part in the description which follows and, in part, will be apparent from the description, or may be learned by practice of the presented embodiments.

In one or more embodiments, a positive electrode active material includes: core particles (i.e., a plurality of core particles) including a lithium nickel-based composite oxide having a nickel content (e.g., amount) of greater than or equal to (e.g., at least) about 80 mol% based on 100 mol% of a total metal excluding lithium in the lithium nickel-based composite oxide; and a coating layer arranged on a surface of each core particle and including aluminium, wherein the core particles are each in a form of a secondary particle in which a plurality of primary particles are agglomerated, and an aluminium content (e.g., amount), based on a total of 100 at% of nickel, cobalt, and aluminium, is about 10 atomic percent (at%) to about 15 at% as measured by energy profiling energy dispersive spectroscopy (EP-EDS) on a surface of a positive electrode active material particle including the core particle and the coating layer (e.g., a surface of a positive electrode active material particle, comprising one of the core particles and its corresponding coating layer, has an aluminium content in a range of 10 at% to 15 at%, based on a total of 100 atomic percent of nickel, cobalt, and aluminium, as measured by energy profiling energy dispersive spectroscopy (EP-EDS)).

In one or more embodiments, a method for preparing a positive electrode active material includes: (i) preparing core particles including a lithium nickel-based composite oxide; (ii) adding the core particles to an aqueous solvent and mixing to prepare a first mixed solution, and removing the aqueous solvent to prepare a first dried product; (iii) adding the first dried product to an aqueous solvent, and adding an aluminium raw material thereto and mixing to prepare a second mixed solution; and (iv) removing an aqueous solvent from the second mixed solution to prepare a second dried product and heat-treating the second dried product to form a coated product having a coating layer formed on a surface of each core particle.

In one or more embodiments, a positive electrode includes a current collector, and a positive electrode active material layer on the current collector, wherein the positive electrode active material layer includes the positive electrode active material (e.g., in a form of particles).

In one or more embodiments, a rechargeable lithium battery includes: the positive electrode; a negative electrode; and an electrolyte.

At least some of the above and other features of the invention are set out in the claims.

The rechargeable lithium battery using the positive electrode active material according to one or more embodiments may exhibit high initial charge/discharge capacity and efficiency (initial charge/discharge efficiency) even under high-voltage driving conditions, and may implement long cycle-life characteristics under high-voltage and high-temperature conditions. These improvements are attributed to the presence of an aluminium-containing coating layer (hereinafter, may be referred as "coating layer containing aluminium", "aluminium coating layer" or "coating layer") on the surface of lithium nickel-based composite oxide core particles, which contributes to surface stabilization, mitigates side reactions with the electrolyte, and enhances structural integrity during repeated charge/discharge cycles. The aluminium coating layer, present in an amount of about 10 at% to about 15 at% relative to 100 at% of the total content of nickel, cobalt, and aluminium, plays a role in enhancing the interface between the active material and the electrolyte. This controlled surface composition reduces transition metal dissolution and suppresses microcracking of secondary particles, thereby extending the operational lifespan of the battery. As a result, the disclosed positive electrode active material may be for utilization in high-energy density applications such as electric vehicles, grid-scale energy storage systems, and residential power storage units, where long-term reliability and thermal stability are desired.

## BRIEF DESCRIPTION OF DRAWINGS

The accompanying drawings are included to provide a further understanding of the present disclosure and are incorporated in and constitute a part of the present disclosure. The drawings illustrate embodiments of the present disclosure and, together with the description, serve to explain principles of the present disclosure. The above and other aspects, features, and advantages of certain embodiments of the present disclosure will be more apparent from the following description taken in conjunction with the accompanying drawings.

FIGS. 1 to 4 are each a view schematically showing a rechargeable lithium battery according to one or more embodiments of the present disclosure.
FIG. 5 is a scanning electron microscope (SEM) image of the surface of the positive electrode active material prepared in Example 2-1 of the present disclosure.
FIG. 6 is a scanning electron microscope (SEM) image of the surface of the positive electrode active material prepared in Comparative Example 2-2 of the present disclosure.
FIG. 7 is a scanning electron microscope (SEM) image of the surface of the positive electrode active material prepared in Comparative Example 2-5 of the present disclosure.
FIG. 8 is a scanning electron microscope (SEM) image of the surface of the positive electrode active material prepared in Comparative Example 2-6 of the present disclosure.
FIG. 9 is a transmission electron microscope-energy dispersive spectrometry (TEM-EDS) image showing aluminium in the cross-section of the positive electrode active material prepared in Example 2-1 of the present disclosure.
FIG. 10 is a scanning electron microscope-energy dispersive spectroscopic analysis (SEM-EDS) image showing aluminium in the cross-section of the positive electrode active material prepared in Comparative Example 2-2 of the present disclosure.

## DETAILED DESCRIPTION

Hereinafter, one or more embodiments of the present disclosure will be described in more detail so that those of ordinary skill in the art may easily implement them and understand the disclosure. However, this disclosure may be embodied in many different forms and is not construed as limited to the presented embodiments set forth herein.
The terminology used herein is used to describe embodiments only, and is not intended to limit the present disclosure. The singular expression in the present disclosure may include the plural expression unless the context clearly dictates otherwise. For example, the singular forms "a," "an," "one," and "the" are intended to include the plural forms as well, unless the context clearly indicates otherwise. Further, the use of "may" when describing embodiments of the present disclosure refers to "one or more embodiments of the present disclosure".
As used herein, "combination thereof" refers to a mixture, a laminate, a composite, a copolymer, an alloy, a blend, a reaction product, and/or the like of the constituents.
Here, it should be understood that terms such as "comprise(s)/comprising," "include(s)/including," and/or "has(have)/having" are intended to designate the presence of an embodied feature, number, step (e.g., act or task), element, or a combination thereof, but it does not preclude the possibility of the presence or addition of one or more other features, numbers, steps (e.g., acts or tasks), elements, or a combination thereof. Additionally, the terms "comprise(s)/-comprising," "include(s)/including," "have/has/having", or other similar terms include or support the terms "consisting of" and "consisting essentially of," indicating the presence of stated features, numbers, steps, operations, elements, and/or components, without or essentially without the presence of other features, numbers, steps, operations, elements, components, and/or groups thereof.
In the drawings, the thickness of layers, films, panels, regions, and/or the like, may be exaggerated for clarity, and like reference numerals designate like elements throughout the disclosure, duplicative descriptions thereof may not be provided for conciseness. It will be understood that if (e.g., when) an element such as a layer, film, region, or substrate is referred to as being "on" another element, it may be directly on the other element or one or more intervening elements may also be present therebetween. In contrast, if (e.g., when) an element is referred to as being "directly on" another element, there are no intervening elements present therebetween.

Here, "layer" as used herein includes not only a shape formed on the whole surface if (e.g., when) viewed from a plan view, but also a shape formed on a partial surface (e.g., a portion of whole surface).

The average particle diameter/size may be measured by a method well suitable (known) to those skilled in the art, for example, by a particle size analyzer, or by using a transmission electron microscope image or a scanning electron microscope image. In one or more embodiments, an average particle diameter/size may be obtained using a dynamic light scattering method by measuring a sample, performing data analysis, counting the number of particles for each particle size range, and calculating from the collected data. Unless otherwise defined, the average particle diameter/size ($D_{50}$) may refer to the diameter/size of particles having a cumulative volume of 50 volume% in a particle size distribution. In other words, $D_{50}$ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates a particle diameter or an average particle diameter, and when the particles are non-spherical, the "diameter" indicates a major axis length or an average major axis length. As used herein, if (e.g., when) a definition is not otherwise provided, the average particle diameter/size ($D_{50}$) refers to a diameter/size of particles having a cumulative volume of 50 volume% in a particle size distribution that is obtained by measuring the size (diameter or major axis length) of about 20 particles at random in a scanning electron microscope image.

Here, "and/or," "or," and "/" are not to be construed as an exclusive meaning, for example, "A or B," "A and/or B," "A/B," and/or the like may be construed to include A, B, A+B, and/or the like.

Here, "metal" is interpreted as a concept including one or more selected from among ordinary metals, transition metals, and metalloids (semi-metals).

**Positive Electrode Active Material**

In one or more embodiments, a positive electrode active material includes: core particles including a lithium nickel-based composite oxide having a nickel content (e.g., amount) of greater than or equal to (e.g., at least) about 80 mol% based on 100 mol% of a total metal excluding lithium in the lithium nickel-based composite oxide; and a coating layer arranged on a surface of each core particle and including aluminium, wherein the core particles are each in a form of a secondary particle in which a plurality of primary particles are agglomerated, and an aluminium content (e.g., amount), based on a total of 100 at% of nickel, cobalt, and aluminium, is about 10 at% to about 15 at% as measured by energy profiling energy dispersive spectroscopy (EP-EDS) on a surface of a positive electrode active material particle including the core particle and the coating layer (e.g., a surface of each positive electrode active material particle, comprising one of the core particles and its corresponding coating layer, has an aluminium content in the range of about 10 at% to about 15 at%, based on a total of 100 atomic percent of nickel, cobalt, and aluminium, as measured by energy profiling energy dispersive spectroscopy (EP-EDS)).

In one or more embodiments, a method is provided in which a coating layer (aluminium-containing coating layer) including aluminium in a specific content (e.g., amount) is introduced onto the surface of a core particle including a lithium nickel-based composite oxide, thereby maintaining a stable structure even at high voltage, implementing high-capacity and long cycle-life characteristics, and improving high-temperature storage characteristics.

When coating an aluminium-containing coating layer to strengthen the surface of the positive electrode active material (e.g., the positive electrode active material particle), it is not easy to actually realize that aluminium is uniformly (e.g., substantially uniformly) coated on the surface of the particle in the form of a shell because aluminium has a strong tendency to diffuse into the internal portion of the particle. In one or more embodiments, conditions are provided under which aluminium may be uniformly (e.g., substantially uniformly) coated on the particle surface without increasing resistance. Accordingly, the aluminium concentration on the particle surface, i.e., a ratio of Al/(Ni+Co+Al), is confirmed to be about 10 at% to about 15 at%, and a method for readily implementing such a concentration is provided. A rechargeable lithium battery using a positive electrode active material according to one or more embodiments may have improved initial charge/discharge capacity and efficiency under high-voltage conditions while at the same time improving high-temperature cycle-life characteristics, and also improving high-temperature storage characteristics.

**Core Particles**

The core particles include a lithium nickel-based composite oxide having a nickel content (e.g., amount) of greater than or equal to (e.g., at least) about 80 mol% based on 100 mol% of the total metal excluding lithium in the lithium nickel-based composite oxide. For example, in one or more embodiments, the lithium nickel-based composite oxide may be represented by Chemical Formula 1.

**Chemical Formula 1** $\quad\quad Li_{a1}Ni_{x1}M^1_{y1}M^2_{z1}O_{2-b1}X_{b1}$

In Chemical Formula 1, $0.9 \le a1 \le 1.8$, $0.8 \le x1 \le 1$, $0 \le y1 \le 0.2$, $0 \le z1 \le 0.2$, $0.9 \le x1+y1+z1 \le 1.1$, $0 \le b1 \le 0.1$, $M^1$ and $M^2$ may each independently be one or more elements selected from among aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), zinc (Zn), yttrium (Y), and zirconium (Zr), $M^1$ and $M^2$ are different elements from each other, and X may be one or more elements selected fluorine (F), phosphorus (P), and sulfur (S).

In one or more embodiments, in Chemical Formula 1, for example, $0.9 \le x1<1$, $0<y1 \le 0.1$, and $0 \le z1 \le 0.1$.

The lithium nickel-based composite oxide may be a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol%, and less than or equal to about (e.g., at most) 99 mol%, based on 100 mol% of the total metal excluding lithium in the lithium nickel-based composite oxide. The high nickel-based positive electrode active materials may achieve high capacity and may be applied to high-capacity, high-density rechargeable lithium batteries. Nickel is included in the core particles, but may migrate to a portion of the coating layer during the coating process, and therefore the nickel content (e.g., amount) may refer to the nickel content (e.g., amount) included in the positive electrode active material in total.

In the lithium nickel-based composite oxide, a cobalt content (e.g., amount) based on 100 mol% of the total metal excluding lithium may be less than or equal to about (e.g., at most) 8 mol%, for example, about 0.1 mol% to about 8 mol%, about 1 mol% to about 8 mol%, about 3 mol% to about 8 mol%, about 3 mol% to about 6 mol%, or about 6 mol% to about 8 mol%. If (e.g., when) the cobalt content satisfies the above range, a stable structure may be maintained, the problem of the structure collapsing due to charge and discharge may be suppressed or reduced, and the long cycle-life characteristics of the positive electrode active material may be implemented.

In one or more embodiments, the lithium nickel-based composite oxide may be, for example, a lithium nickel-aluminium-based composite oxide that further includes aluminium in addition to nickel. If (e.g., when) aluminium is included in the lithium nickel-based composite oxide, it is advantageous in maintaining a stable structure. In the lithium nickel-based composite oxide, an aluminium content (e.g., amount) based on 100 mol% of the total metal excluding lithium may be greater than or equal to about 0.1 mol%, greater than or equal to about 0.5 mol%, or greater than or equal to about 1.0 mol% and less than or equal to about (e.g., at most) 3.0 mol%, for example about 1.0 mol% to about 3.0 mol%, about 1.0 mol% to about 2.5 mol%, about 1.0 mol% to about 2.0 mol%, or about 1.0 mol% to about 1.5 mol%. Here, the aluminium content (e.g., amount) refers to a content (e.g., amount) of aluminium present in the core particles. If (e.g., when) the aluminium content (e.g., amount) satisfies the above range, a stable structure may be maintained, the problem of the structure collapsing due to charge and discharge may be suppressed or reduced, and the long cycle-life characteristics of the positive electrode active material may be implemented.

In one or more embodiments, a concentration of aluminium within the core particle may be substantially uniform. For example, it refers to that aluminium has a low concentration gradient from the center to the surface within the core particle, or that the aluminium concentration is neither higher nor lower at the outer portion than at the internal portion within the core particle, and that aluminium within the core particle is evenly distributed. This may refer to a structure obtained by synthesizing a lithium nickel-aluminium-based composite oxide by using a nickel-aluminium-based composite hydroxide as a precursor which is obtained using an aluminium raw material in the preparation of the precursor without additionally doping aluminium during the synthesis process of the core particle. The core particle is in a form of secondary particle in which a plurality of primary particles is agglomerated, and the aluminium content (e.g., amount) in the internal portion of the primary particle may be substantially the same or similar regardless of the location of the primary particle. For example, if a primary particle is selected at a random position in the cross-section of a secondary particle and the aluminium content (e.g., amount) is measured in the internal portion of the primary particle rather than at its interface or surface, regardless of the location of the primary particle, that is, whether the primary particle is close to the center of the secondary particle or close to the surface of the secondary particle, the aluminium content (e.g., amount) may be substantially the same/similar/substantially uniform. In such a structure, a stable structure may be maintained, and aluminium byproducts or aluminium aggregates do not occur, so that the capacity, efficiency, and cycle-life characteristics of the positive electrode active material may be improved concurrently (e.g., simultaneously).

The core particle is in a form of secondary particle in which a plurality of primary particles is agglomerated. Here, the secondary particle may be spherical, ellipsoidal, polyhedral, or irregularly shaped, and the primary particles may be spherical, ellipsoidal, plate-shaped, or a combination thereof.

An average particle diameter ($D_{50}$) of the core particles may be about 10 micrometers ($\mu$m) to about 25 $\mu$m, for example, about 11 $\mu$m to about 20 $\mu$m, or about 12 $\mu$m to about 18 $\mu$m. The average particle diameter ($D_{50}$) refers to a diameter of particles having a cumulative volume of 50 volume% in a particle size distribution that is obtained by measuring the size (diameter or major axis length) of about 20 particles at random in a scanning electron microscope image of the positive electrode active material. If the average particle diameter of the core particles satisfies the above range, high capacity and long cycle-life may be achieved, and it may be advantageous for forming a coating layer according to one or more embodiments.

The core particles are easily chemically attacked by components in an electrolyte if (e.g., when) the battery is operated under high-voltage or high-temperature conditions, so that side reactions with the electrolyte may occur readily and frequently, and as a result, a large amount of gas is generated, which reduces the battery cycle-life and safety. However, these problems may be solved by introducing a coating layer according to one or more embodiments described below.

**Coating Layer**

According to one or more embodiments, the positive electrode active material includes a coating layer arranged on a surface of a core particle and including aluminium, wherein an aluminium content (e.g., amount) is about 10 at% to about 15 at%, for example, about 10.5 at% to about 14.5 at%, or about 11 at% to about 14 at%, based on a total of 100 at% of nickel, cobalt, and aluminium as measured by energy profiling energy dispersive spectroscopy (EP-EDS) on a surface of the positive electrode active material particle including the core particle and the coating layer.

The aluminium content (e.g., amount) in the coating layer based on 100 mol% of a total metal excluding lithium in the positive electrode active material may be about 0.1 mol% to about 2.0 mol%, for example, about 0.5 mol% to about 2.0 mol%, about 0.5 mol% to about 1.5 mol%, or about 1.0 mol% to about 1.5 mol%. The aluminium content (e.g., amount) in the coating layer may only refer to a content (e.g., amount) of aluminium included in the coating layer, regardless of the aluminium included in the core particles. If (e.g., when) the aluminium content (e.g., amount) satisfies the above range, a stable structure may be maintained, the problem of the structure collapsing due to charge and discharge may be suppressed or reduced, and the long cycle-life characteristics of the positive electrode active material may be implemented.

Additionally, a ratio (Co/Al) of a cobalt molar content (e.g., amount) to an aluminium molar content (e.g., amount) in the positive electrode active material may be about 1.1 to about 5.0, for example, about 1.2 to about 4.5, about 1.3 to about 4.0, about 1.4 to about 4.0, or about 1.5 to about 3.0. The ratio (Co/Al) may refer to, for example, a ratio of the cobalt content (e.g., amount) (mol%) based on 100 mol% of the total metal excluding lithium in the positive electrode active material to the aluminium content (e.g., amount) (mol%) based on 100 mol% of the total metal excluding lithium in the positive electrode active material. The total metal excluding lithium of the positive electrode active material, which is a basis for the above content (e.g., amount) range, may refer to a content (e.g., amount) of the total metal excluding lithium existing in the positive electrode active material particle, not just on the surface of the positive electrode active material particle, the aluminium content (e.g., amount) may refer to a total content (e.g., amount) of aluminium included or optionally being included in the core particle and aluminium included in the coating layer, and the cobalt content (e.g., amount) may refer to a total content (e.g., amount) of cobalt included or optionally being included in the core particle and cobalt optionally being included in the coating layer.

The aluminium content (e.g., amount) and the cobalt content (amount) may be measured, for example, through SEM-EDS analysis of the surface or cross-section of the positive electrode active material. If (e.g., when) the ratio of the cobalt content (e.g., amount) to the aluminium content (e.g., amount) in the positive electrode active material satisfies the above range, the resistance of the positive electrode active material does not increase, side reactions with the electrolyte are effectively suppressed or reduced, and cycle-life characteristics, initial charge/discharge capacity, and initial charge/discharge efficiency of a rechargeable lithium battery under high-voltage and high-temperature conditions may be improved.

The coating layer according to one or more embodiments may be in the form of a film that continuously surrounds (e.g., around) the surface of the core particle, and may be, for example, in the form of a shell that surrounds (e.g., around) the entire surface of the core particle. This is distinct from a structure in which only portion of the surface of the core particle is coated or the surface of the core particle is partially coated. According to one or more embodiments, the coating layer may be formed to entirely cover the surface of the core particle and may be formed to be very thin and substantially uniform in thickness, and therefore the positive electrode active material does not increase resistance or decrease capacity, instead, improves structural stability, effectively suppresses side reactions with an electrolyte, reduces the amount of gas generated under high-voltage and high-temperature conditions, and achieves long cycle-life characteristics.

A thickness of the coating layer according to one or more embodiments may be about 5 nanometers (nm) to about 200 nm, for example, about 5 nm to about 150 nm, about 5 nm to about 100 nm, about 5 nm to about 80 nm, about 5 nm to about 50 nm, or about 10 nm to about 50 nm. If (e.g., when) the coating layer satisfies the thickness range described above, structural stability of the positive electrode active material may be improved, and side reactions with the electrolyte may be effectively suppressed or reduced without increasing resistance or decreasing capacity due to the coating layer. The thickness of the coating layer may be measured, for example, by scanning electron microscope (SEM), transmission electron microscope (TEM), time-of-flight secondary ion mass spectrometry (TOF-SIMS), X-ray photoelectron spectroscopy (XPS), or energy dispersive spectroscopic (EDS) analysis, and for example, by EDS line profile analysis of a cross-section of the positive electrode active material (e.g., positive electrode active material particle).

The coating layer according to one or more embodiments may have a thin thickness of several nanometers to several hundred nanometers, while having a substantially uniform thickness. For example, a deviation in coating layer thickness within one positive electrode active material particle may be less than or equal to about 20%, less than or equal to about 18%, or less than or equal to about 15%. Here, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data (e.g., one thickness) and the arithmetic mean value by the arithmetic mean value and multiplying by 100%. The fact that the deviation or standard deviation of the coating layer thickness satisfies the above range indicates that a coating layer of substantially uniform thickness is formed in a good or suitable shape on the surface of the positive electrode active material particle. Accordingly, structural stability of the positive electrode active material is improved, side reactions with the electrolyte are effectively suppressed or reduced, and the increase in resistance or decrease in capacity due to coating can be minimized or reduced.

In one or more embodiments, the coating layer may further contain nickel, cobalt, or a combination thereof in addition to aluminium. Nickel and cobalt may be included in the core particles and introduced during the coating layer formation process, and their contents are not particularly limited. The coating layer according to one or more embodiments essentially includes aluminium and optionally includes nickel and cobalt, and is formed to have a thin and substantially uniform thickness, thereby improving the high-voltage characteristics of the positive electrode active material and enhancing the cycle-life characteristics.

Additionally, the coating layer may include sulfur in addition to aluminium. The sulfur may inflow during a process of adding aluminium sulfate among the aluminium raw materials added for forming the coating layer, and a content (e.g., amount) thereof is not particularly limited. The coating layer according to one or more embodiments essentially contains aluminium and optionally contains sulfur, thereby improving high-voltage characteristics of a positive electrode active material and cycle-life characteristics.

In one or more embodiments, the aluminium may be diffused into the secondary particles during the process of forming the aluminium coating layer (i.e., coating layer containing aluminium). Accordingly, the positive electrode active material according to one or more embodiments may further include a grain boundary coating portion including the aluminium and located on a surface of each of the primary particles present in an internal portion of the secondary particle. The internal portion of a secondary particle may refer to an entire internal portion excluding the surface (e.g., outermost surface) of the secondary particle, or may refer to a region from the center of the secondary particle towards the surface (e.g., outermost surface) of the secondary particle, up to about 60 length% of the radius of the secondary particle (i.e. the distance from the surface of the secondary particle to the center of the secondary particle). The grain boundary coating portion is a concept distinct from the coating layer on the surface of secondary particles, and refers to the coating portion formed on the surface of primary particles located inside secondary particles. The presence of the grain boundary coating portion may be confirmed by SEM-EDS analysis of the cross-section of the positive electrode active material. By forming an aluminium-containing grain boundary coating portion, the positive electrode active material may be structurally more stabilized and its cycle-life characteristics may be improved.

The aluminium content (e.g., amount) of the grain boundary coating portion is not particularly limited, and for example, the aluminium content (e.g., amount) of the grain boundary coating portion may be less than the aluminium content (e.g., amount) in the coating layer.

The grain boundary coating portion may not include (e.g., may exclude) cobalt or may include a very small amount of cobalt, for example, in the grain boundary coating portion, the cobalt content (e.g., amount) based on 100 mol% of the total metal excluding lithium in the lithium nickel-based composite oxide may be less than or equal to about (e.g., at most) 0.01 mol%, less than or equal to about (e.g., at most) 0.005 mol%, or less than or equal to about (e.g., at most) 0.001 mol%, for example about 0 mol% to about 0.01 mol%, about 0 mol% to about 0.005 mol%, or about 0 mol% to about 0.001 mol%. If the cobalt content (e.g., amount) of the grain boundary coating portion satisfies the above range, side reactions with the electrolyte may be effectively suppressed or reduced and the amount of gas generated under high-voltage or high-temperature conditions may be effectively reduced.

The primary particles may be polycrystalline primary particles, and in this regard, the crystal size (e.g., average crystal size) of the primary particles measured by an X-ray diffraction analysis method may be about 10 nm to about 300 nm, for example, about 15 nm to about 250 nm, about 30 nm to about 200 nm, about 45 nm to about 150 nm, or about 60 nm to about 100 nm. As the crystal size of the primary particles is smaller, a volume change of the particles may decrease approximately in proportion to its cubic root, but if (e.g., when) the crystal size is adjusted within the range, the volume change of the particles may be minimized or reduced during the charge and discharge, which may minimize or reduce cracks and thus increase cycle-life and concurrently (e.g., simultaneously) improve storage characteristics at a high temperature.

The crystal size of the primary particles may be measured in an X-ray diffraction analysis method, for example, at an acceleration voltage/current of 40 kV/40 mA at a scan speed of 0.01 °/sec within a 2θ range of 10° to 70° by using Cu-Kα rays (a wavelength = 1.54 Å) in the X-ray diffraction spectrum and calculated according to Equation 1.

## Equation 1

$$\text{Crystal size (nm)} = K\lambda/\beta\cos\theta$$

In Equation 1, K is about 0.9, λ is about 1.54 Å, β is a full width at half maximum (FWHM) of a curve fitted to a Lorentzian function, and θ is a Bragg angel at the peak of a curve fitted to the Lorentzian function.

The crystal size of the primary particles may refer to a crystal size calculated from peaks of a curve fitted to the Lorentzian function satisfying Bragg's law within a range of about 10° to about 90°.

Additionally, in one or more embodiments, the positive electrode active material may not include (e.g., may exclude) sodium. In general, sodium ions may be used in the preparing process of a positive electrode active material, but according to the preparing method provided herein, a core particle with a stable structure and a coating layer with a substantially uniform thickness may be formed without using sodium ions.

**Method for Preparing Positive Electrode Active Material**

According to one or more embodiments, a method for preparing a positive electrode active material includes: (i) preparing core particles including a lithium nickel-based composite oxide; (ii) adding the core particles to an aqueous solvent and mixing to prepare a first mixed solution, and removing the aqueous solvent to prepare a first dried product; (iii) adding the first dried product to an aqueous solvent, and adding an aluminium raw material thereto and mixing to prepare a second mixed solution; and (iv) removing an aqueous solvent from the second mixed solution to prepare a second dried product and heat-treating the second dried product to form a coated product having a coating layer formed on the surface of each of the core particles.

In the method for preparing a positive electrode active material according to one or more embodiments, the preparing of the core particles including a lithium nickel-based composite oxide may include mixing a nickel-based composite hydroxide and a lithium raw material and performing a first heat treatment. The nickel-based composite hydroxide may be a precursor of the core particles and may be in a form of secondary particles in each of which a plurality of primary particles is agglomerated. The nickel-based composite hydroxide may be prepared by a general co-precipitation method.

In the nickel-based composite hydroxide, a nickel content (e.g., amount) based on 100 mol% of a total metal may be greater than or equal to about 80 mol%, greater than or equal to about 85 mol%, greater than or equal to about 90 mol%, greater than or equal to about 91 mol%, or greater than or equal to about 94 mol% and less than or equal to about (e.g., at most) 99 mol%. If (e.g., when) the nickel content (e.g., amount) satisfies the above range, high capacity may be achieved, and structural stability may be improved.

In the nickel-based composite hydroxide, a cobalt content (e.g., amount) based on 100 mol% of the total metal may be less than or equal to about (e.g., at most) 8 mol%, for example, about 0.1 mol% to about 8 mol%, about 1 mol% to about 8 mol%, about 3 mol% to about 8 mol%, about 3 mol% to about 6 mol%, or about 6 mol% to about 8 mol%. If (e.g., when) the cobalt content (e.g., amount) satisfies the above range, structural stability of the positive electrode active material may be improved while implementing high capacity.

In one or more embodiments, if (e.g., when) the nickel-based composite hydroxide further includes aluminium (i.e., being a nickel-aluminium-based composite hydroxide), in the nickel-aluminium-based composite hydroxide, an aluminium content (e.g., amount) based on 100 mol% of the total metal may be greater than or equal to (e.g., at least) about 0.1 mol%, greater than or equal to about 0.5 mol%, or greater than or equal to about 1.0 mol%, for example, about 1.0 mol% to about 3.0 mol%, about 1.0 mol% to about 2.5 mol%, about 1.0 mol% to about 2.0 mol%, or about 1.0 mol% to about 1.5 mol%. If (e.g., when) the aluminium content (e.g., amount) satisfies the above range, structural stability of the positive electrode active material may be improved while implementing high capacity, and the production price may be reduced to improve economic feasibility.

The method for preparing a positive electrode active material according to one or more embodiments may use a nickel-aluminium-based composite hydroxide as a precursor in which aluminium is evenly dispersed within the structure by using an aluminium raw material during a preparation of the precursor without additionally doping aluminium during the preparation of core particles. If such a precursor is used, it may prepare a positive electrode active material whose structure remains stable even after repeated charge and discharge, and because aluminium byproducts or aluminium aggregates are not formed, the capacity and efficiency characteristics and cycle-life characteristics of the positive electrode active material may be improved.

The nickel-based composite hydroxide may be represented, for example, by Chemical Formula 2.

**Chemical Formula 2**     $Ni_{x2}M^3_{y2}M^4_{z2}(OH)_2$

In Chemical Formula 2, $0.8 \leq x2 \leq 1$, $0 \leq y2 \leq 0.2$, $0 \leq z2 \leq 0.2$, $0.9 \leq x2+y2+z2 \leq 1.1$, $M^3$ and $M^4$ may each independently be one or more elements selected from among Al, B, Ba, Ca, Ce, Co, Cr, Cu, Fe, Mg, Mn, Mo, Nb, Si, Sn, Sr, Ti, V, W, Zn, Y, and Zr, and $M^3$ and $M^4$ may be different from each other.

In one or more embodiments, in Chemical Formula 2, for example, $0.9 \leq x2<1$, $0<y2 \leq 0.1$, and $0 \leq z2 \leq 0.1$.

The nickel-based composite hydroxide may be in the form of secondary particles, and an average particle diameter ($D_{50}$) of the secondary particles may be about 10 μm to about 25 μm, for example, about 11 μm to about 20 μm, or about 12 μm to about 18 μm.

The nickel-based composite hydroxide and the lithium raw material may be mixed in a molar ratio of about 1:0.9 to about 1:1.8, for example, in a molar ratio of about 1:0.9 to about 1:1.5 or about 1:1 to about 1:1.2. The first heat treatment may be performed in an oxygen atmosphere and may be performed at a temperature range of, for example, about 750 °C to about 950 °C, about 750 °C to about 900 °C, or about 750 °C to about 890 °C, and may be performed for about 2 hours to about 20 hours, or about 4 hours to about 16 hours.

The lithium nickel-based composite oxide may be obtained through the first heat treatment. In the obtained lithium nickel-based composite oxide, a nickel content (e.g., amount) based on 100 mol% of the total metal excluding lithium may be greater than or equal to about 80 mol%, greater than or equal to about 85 mol%, greater than or equal to about 90 mol%, greater than or equal to about 91 mol%, or greater than or equal to about 94 mol%, and less than or equal to about (e.g., at most) 99 mol%, a cobalt content (e.g., amount) based on 100 mol% of the total metal excluding lithium may be less than or equal to about (e.g., at most) 8 mol%, for example, about 0.1 mol% to about 8 mol%, about 1 mol% to about 8 mol%, about 3 mol% to about 8 mol%, about 3 mol% to about 6 mol%, or about 6 mol% to about 8 mol%, and an aluminium content (e.g., amount) may be about 1.0 mol% to about 3.0 mol%. In one or more embodiments, the method is provided to coat the surface of the core particles including a lithium nickel-based composite oxide with aluminium while providing a very substantially uniform thickness.

In one or more embodiments, the core particles are first introduced into an aqueous solvent and mixed to prepare a first mixed solution, and the aqueous solvent is removed to prepare a first dried product having a lower residual lithium content (e.g., amount) on the surface of the core particles. After that, the first dried product is added to an aqueous solvent, and then the aluminium raw material is added thereto and mixed to prepare a second mixed solution. Thereafter, the aqueous solvent is removed from the second mixed solution to prepare a second dried product, and the second dried product is heat-treated to form a coating layer according to one or more embodiments. Unlike the pre-addition method in which the salt, which is a coating raw material, is first completely dissolved and then the positive electrode active material particles are added, the high-nickel positive electrode active material is washed twice using an aqueous solvent to reduce the residual lithium content (e.g., amount) on the particle surface, and then aluminium coating is performed, thereby applying optimal or suitable conditions for forming a substantially uniform aluminium coating layer on the core particles including the lithium nickel-based composite oxide.

The aqueous solvent may include distilled water, an alcohol-based solvent, or a combination thereof. The aluminium raw material may be aluminium sulfate, aluminium nitrate, or a combination thereof, or may be, for example, aluminium sulfate. The aluminium sulfate may be the preferred or suitable raw material for forming a substantially uniform aluminium coating layer on the core particles including lithium nickel-based composite oxide.

Based on a total of 100 mol% of a total metal excluding lithium in the core particles and aluminium of the aluminium raw material, the aluminium content (e.g., amount) in the coating layer may be about 0.1 mol% to about 2.0 mol%, for example, about 0.5 mol% to about 2.0 mol%, about 0.5 mol% to about 1.5 mol%, or about 1.0 mol% to about 1.5 mol%. By designing the aluminium coating content (e.g., amount) within the above range, the coating layer may be formed to have a thin and substantially uniform thickness of several nanometers to hundreds of nanometers, which may reduce an amount of gas generated of a rechargeable lithium battery under high-voltage or high-temperature operating conditions and improve high capacity and long cycle-life characteristics.

The speed/rate desired or required to introduce the first dried product into the aqueous solvent may be about 30 seconds/500 g to about 2 minutes/500 g, for example, about 30 seconds/500 g to about 1.5 minutes/500 g. By appropriately or suitably controlling a speed/rate at which the first dried product is injected, the pH of the supernatant after coating is appropriately or suitably controlled or selected, thereby effectively inducing the formation of an aluminium coating layer according to one or more embodiments. If the injection speed of the first dried product is too slow, a reaction rate for each particle may vary, failing in forming a substantially uniform coating layer. In addition, if the injection speed of the first dried product is too fast, the pH of the resulting mixture quickly changes, also failing in forming a substantially uniform coating layer.

After adding the first dried product and the aluminium raw material to the aqueous solvent, the mixture may be stirred for about 15 minutes to about 60 minutes, for example, about 20 minutes to about 50 minutes or about 30 minutes to about 45 minutes. The injection of the first dried product (core particles) to the aqueous solvent and the stirring may be performed within about 1 hour by appropriately or suitably adjusting total time. Through these mixing conditions, the aluminium raw material is completely dissolved in the aqueous solvent to produce a colorless and transparent coating solution, so that this coating solution may be used to effectively form a substantially uniform coating layer according to one or more embodiments.

In one or more embodiments, if (e.g., when) the mixing is stopped after adding the aluminium raw material to the second mixed solution, that is, if (e.g., when) the second mixed solution is prepared, the pH of a supernatant thereof may be within a range of about 5.5 to about 8.5, for example, about 5.5 to about 7.5, about 6.0 to about 8.0 or about 6.5 to about 7.5. If the supernatant has a pH of less than about 5.5, acidity becomes strong, failing in forming a substantially uniform coating layer, but if the pH is greater than about 8.5, because basicity becomes strong, it also becomes difficult to from a substantially uniform aluminium coating layer.

After removing the aqueous solvent from the second mixed solution, the second dried product may be prepared therefrom, for example, at about 40 °C to about 240 °C, about 100 °C to about 220 °C, or about 150 °C to about 200 °C, for example, under a vacuum condition, and a good or suitable second dried product may be obtained under these conditions.

The second dried product includes the core particles and the coating layer arranged on the surface of each of the core particles and including aluminium. In one or more embodiments, the coating layer may include a fiber shape (e.g., in a form of fibers), for example, a spider web shape, or a mesh shape. Such a mesh may be formed continuously across the entire surface of the core particle. The mesh-like coating layer, which has a very thin and substantially uniform thickness, may wrap the core particle very thinly and uniformly (e.g., substantially uniformly), thereby reinforcing the surface of the positive electrode active material and improving structural stability and thereby, enhancing high-temperature and high-voltage characteristics.

If the heat treatment of the nickel-based composite hydroxide and the lithium raw material is expressed as a first heat treatment, the heat treatment of the second dried product may be called to be a second heat treatment. The second heat treatment may be understood as a process of forming a coating layer, for example, performed within a temperature range of about 700 °C to about 850 °C, about 700 °C to about 840 °C, or about 700 °C to about 830 °C under an oxygen atmosphere for about 2 hours to about 20 hours or about 3 hours to about 15 hours. If (e.g., when) the second heat treatment temperature is set within the ranges, aluminium tends to be less diffused into an internal portion of the secondary particle (i.e., core particle) but remain mainly on the surface of the secondary particle and concurrently (e.g., simultaneously) coated as a very thin and substantially uniform shell on the surface of the secondary particle.

## Positive Electrode

According to one or more embodiments of the present disclosure, a positive electrode includes a current collector, and a positive electrode active material layer on the current collector, wherein the positive electrode active material layer includes the positive electrode active material of one or more embodiments. In one or more embodiments, the positive electrode active material layer may further include other types (kinds) of positive electrode active materials in addition to the positive electrode active material. Additionally, the positive electrode active material layer may optionally further include a binder, a conductive material (e.g., an electron conductor), or a combination thereof.

According to one or more embodiments, a loading level of the positive electrode active material layer may be about 10 mg/cm$^2$ to about 40 mg/cm$^2$, for example, about 10 mg/cm$^2$ to about 30 mg/cm$^2$, or about 10 mg/cm$^2$ to about 20 mg/cm$^2$. Additionally, a density of the positive electrode active material layer in a finally compressed positive electrode may be about 3.2 g/cc to about 3.6 g/cc, for example, about 3.3 g/cc to about 3.6 g/cc or about 3.4 g/cc to about 3.58 g/cc. When applying the positive electrode active material according to one or more embodiments, it is advantageous to implement such loading level and positive electrode density, and a positive electrode satisfying the loading level and positive electrode density in the above range is suitable for implementing a high-capacity, high-energy-density rechargeable lithium battery.

## Binder

The binder improves binding properties of positive electrode active material particles with one another and with the positive electrode current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

## Conductive Material

The conductive material (e.g., electrically conductive material, e.g., electron conductor) is included to provide electrode conductivity, and any electrically conductive material may be used as a conductive material unless it causes an undesirable chemical change. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material including copper, nickel, aluminium, silver, and/or the like, in the form of a metal powder or a metal fiber; a conductive polymer such as a polyphenylene derivative; and/or a mixture thereof.

Amounts of the binder and the conductive material may each be about 0.5 wt% to about 5 wt%, based on a total weight of 100 wt% of the positive electrode active material layer.

In one or more embodiments, the positive electrode current collector may include Al, but embodiments of the present disclosure are not limited thereto.

## Rechargeable Lithium Battery

According to one or more embodiments of the present disclosure, a rechargeable lithium battery includes the aforementioned positive electrode, a negative electrode, and an electrolyte. In one or more embodiments, the rechargeable lithium battery may include the positive electrode, a negative electrode, a separator arranged between the positive electrode and the negative electrode, and an electrolyte solution.

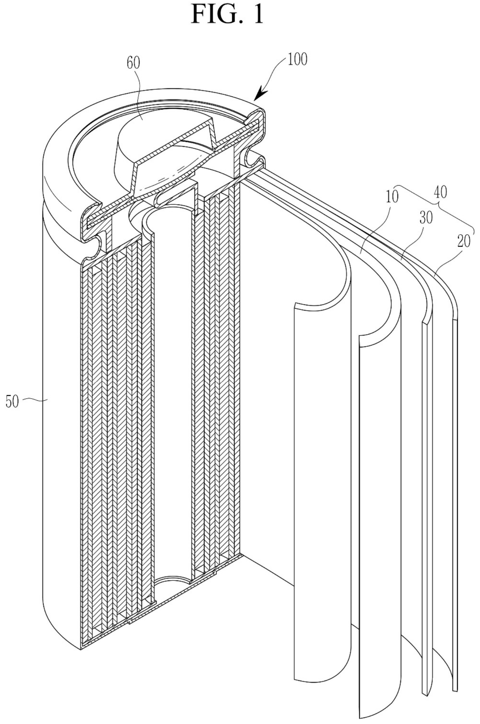

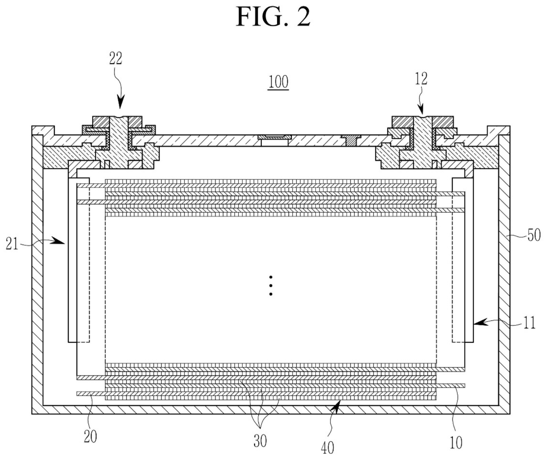

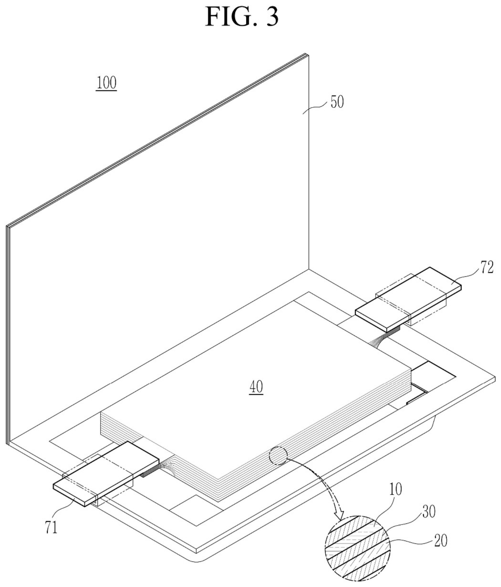

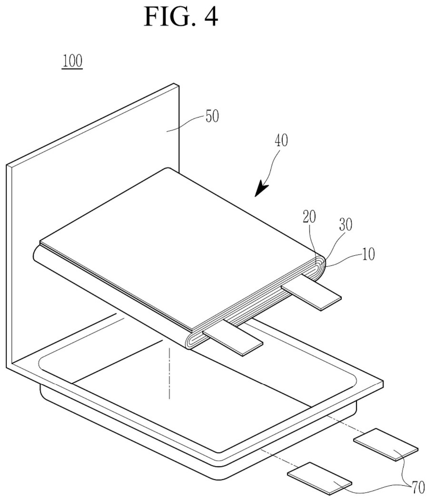

The rechargeable lithium battery may be classified into a cylindrical, prismatic, pouch, or coin-type battery, depending on a shape thereof. FIGS. 1 to 4 are each a schematic view showing a rechargeable lithium battery according to one or more embodiments, where FIG. 1 shows a cylindrical battery, FIG. 2 shows a prismatic battery, and FIGS. 3 and 4 each show a pouch-shaped battery. Referring to FIGS. 1 to 4, a rechargeable lithium battery 100 includes an electrode assembly 40 with a separator 30 interposed between a positive electrode 10 and a negative electrode 20, and a case 50 in which the electrode assembly 40 is housed. The positive electrode 10, the negative electrode 20, and the separator 30 may be impregnated with an electrolyte solution. In one or more embodiments, the rechargeable lithium battery 100 may include a sealing member 60 that seals the case 50, as shown in FIG. 1. In one or more embodiments, as shown in FIG. 2, the rechargeable lithium battery 100 may include a positive electrode lead tab 11, a positive electrode terminal 12, a negative electrode lead tab 21, and a negative electrode terminal 22. In one or more embodiments, as shown in FIGS. 3 and 4, the rechargeable lithium battery 100 includes an electrode tab 70, that is, a positive electrode tab 71 and a negative electrode tab 72, serving as an electrical path for inducing the current formed in the electrode assembly 40 to the outside.

The rechargeable lithium battery according to one or more embodiments may be rechargeable at a high voltage, or may be suitable for being driven at a high voltage. For example, a charging upper limit voltage of the rechargeable lithium battery may be greater than or equal to (e.g., at least) about 4.25 V, about 4.25 V to about 4.7 V, about 4.25 V to about 4.6 V, or about 4.25 V to about 4.55 V. By applying the positive electrode active material according to one or more embodiments, the rechargeable lithium battery may significantly reduce an amount of gas generated even if (e.g., when) charged at high voltage and may achieve high capacity and long cycle-life characteristics.

## Negative Electrode

The negative electrode may include a negative electrode current collector and a negative electrode active material layer on the negative electrode current collector, and may further include a negative electrode active material (e.g., in a form of particles), a binder, a conductive material (e.g., electron conductor), or a combination thereof.

## Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, $SiO_x$ ($0<x \leq 2$), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (Tl), germanium (Ge), phosphorus (P), arsenic (As), antimony (Sb), bismuth (Bi), sulfur (S), selenium (Se), tellurium (Te), polonium (Po), and a combination thereof), or a combination thereof. The Sn-based negative electrode active material may be Sn, $SnO_x$ ($0 < x \leq 2$) (e.g., $SnO_2$), a Sn alloy, or a combination thereof.

The silicon-carbon composite (e.g., in a form of particles) may be a composite of silicon and amorphous carbon. An average particle diameter ($D_{50}$) of the silicon-carbon composite particles may be, for example, about 0.5 $\mu$m to about 20 $\mu$m. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

In one or more embodiments, the silicon-carbon composite may further include crystalline carbon. For example, the silicon-carbon composite may include a core including crystalline carbon and silicon particles, and an amorphous carbon coating layer on the surface of the core. The crystalline carbon may be artificial graphite, natural graphite, or a combination thereof. The amorphous carbon may include soft carbon, hard carbon, a mesophase pitch carbonized product, and/or calcined coke.

If (e.g., when) the silicon-carbon composite includes silicon and amorphous carbon, an amount of silicon may be about 10 wt% to about 50 wt% and an amount of amorphous carbon may be about 50 wt% to about 90 wt%, based on a total weight of 100 wt% of the silicon-carbon composite. In one or more embodiments, if (e.g., when) the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%, based on a total weight of 100 wt% of the silicon-carbon composite.

Additionally, a thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may exist as silicon alone, in the form of a silicon alloy, or in an oxidized form. The oxidized form of silicon may be represented by $SiO_x$ ($0 < x \leq 2$). In this regard, the atomic content (e.g., amount) ratio of Si:O, which indicates a degree of oxidation, may be about 99:1 to about 33:67. As used herein, if (e.g., when) a definition is not otherwise provided, an average particle diameter ($D_{50}$) indicates a particle where a cumulative volume is about 50 volume% in a particle size distribution.

In one or more embodiments, the Si-based negative electrode active material or the Sn-based negative electrode active material may be mixed with the carbon-based negative electrode active material. If (e.g., when) the Si-based negative electrode active material or the Sn-based negative electrode active material and the carbon-based negative electrode active material are mixed and used, the mixing ratio thereof may be a weight ratio of about 1:99 to about 90:10.

**Binder**

The binder serves to well adhere the negative electrode active material particles to each other and also to adhere the negative electrode active material to the negative electrode current collector. The binder may be a non-aqueous (e.g., water-insoluble) binder, an aqueous (water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous binder is used as the binder of the negative electrode, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, or a combination thereof.

**Conductive Material**

The conductive material (e.g., electrically conductive material, e.g., electron conductor) is included to provide electrode conductivity and any electrically conductive material may be used as a conductive material unless it causes an undesirable chemical change. Non-limiting examples of the conductive material include a carbon-based material such as natural graphite, artificial graphite, carbon black, acetylene black, Ketjen black, a carbon fiber, a carbon nanofiber, a carbon nanotube, and/or the like; a metal-based material including copper, nickel, aluminium, silver, and/or the like in the form of a metal powder or a metal fiber; a conductive polymer such as a polyphenylene derivative; and/or a mixture thereof.

An amount of the negative electrode active material may be about 95 wt% to about 99.5 wt% based on a total weight of 100 wt% of the negative electrode active material layer, and an amount of the binder may be about 0.5 wt% to about 5 wt% based on the total weight of 100 wt% of the negative electrode active material layer. For example, in one or more embodiments, the negative electrode active material layer may include about 90 wt% to about 99 wt% of the negative electrode active material, about 0.5 wt% to about 5 wt% of the binder, and about 0.5 wt% to about 5 wt% of the conductive material, based on the total weight of 100 wt% of the negative electrode active layer.

**Current Collector**

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, a sheet, or a foam. A thickness of the negative electrode current collector may be, for example, about 1 $\mu$m to about 20 $\mu$m, about 5 $\mu$m to about 15 $\mu$m, or about 7 $\mu$m to about 10 $\mu$m.

**Electrolyte**

In one or more embodiments, the electrolyte for a rechargeable lithium battery may be an electrolyte solution, which may include a non-aqueous organic solvent and a lithium salt.

The non-aqueous organic solvent serves as a medium for transmitting ions that take part in an electrochemical reaction of the rechargeable lithium battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes; and/or the like.

The non-aqueous organic solvent may be used alone or in a mixture of two or more types (kinds), and if (e.g., when) two or more types (kinds) are used in a mixture, a mixing ratio may be appropriately or suitably adjusted according to the desired or suitable battery performance, which is widely suitable to those working in the field.

If (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, in one or more embodiments, a carbonate-based solvent and an aromatic hydrocarbon-based organic solvent may be mixed and used in a volume ratio of about 1:1 to about 30:1.

In one or more embodiments, the electrolyte solution may further include vinylethylene carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and/or the like.

The lithium salt dissolved in the organic solvent supplies lithium ions in the rechargeable lithium battery, enables a basic operation of the rechargeable lithium battery, and improves transportation of the lithium ions between positive and negative electrodes. Non-limiting examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte solution has appropriate or suitable ionic conductivity and viscosity, and thus excellent or suitable performance may be achieved, and lithium ions may move effectively.

**Separator**

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, a polyethylene/polypropylene/polyethylene three-layer separator, a polypropylene/polyethylene/-polypropylene three-layer separator, and/or the like.

The separator may include a porous substrate and a coating layer including an organic material, an inorganic material, or a combination thereof on a surface (e.g., one or both surfaces (e.g., two opposite surfaces)) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acrylic copolymer including a first structural unit derived from (meth) acrylamide, and a second structural unit including at least one of a structural unit derived from (meth)acrylic acid or (meth) acrylate, or a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and combinations thereof, but embodiments of the present disclosure are not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 $\mu$m to about 20 $\mu$m, for example, about 1 $\mu$m to about 10 $\mu$m, or about 1 $\mu$m to about 5 $\mu$m.

Examples and comparative examples of the present disclosure will be described in more detail hereinafter. However, the following examples are merely examples of the present disclosure, and the present disclosure is not limited to the following examples.

**Example 1-1**

**1. Preparation of Positive Electrode Active Material**

$Ni_{0.91}Co_{0.075}Al_{0.015}(OH)_2$ and LiOH were mixed in a molar ratio of 1:1.03 and subjected to a first heat treatment at 775 °C for 15 hours in an oxygen atmosphere to prepare a lithium nickel-based composite oxide in the form of secondary particles having a composition of $Li_{1.03}Ni_{0.91}Co_{0.075}Al_{0.015}O_2$ and an average particle size ($D_{50}$) of approximately 14 $\mu$m.

In a 1 L reactor, 500 g of the prepared lithium nickel -based composite oxide and 600 g of distilled water were added and then, stirred for 30 minutes. After removing the solvent by using an aspirator and a filter press, a dried product (first dried product) was obtained through vacuum-drying at 190 °C. Subsequently, in the 1 L reactor, 600 g of distilled water and aluminium sulfate were added and then, stirred at about 350 rpm for about 5 minutes for salt-dissolution, preparing a coating solution. The salt was completely dissolved in the coating solution, which appeared colorless and transparent. While continuously stirring the coating solution, 500 g of the dried product was added thereto for 1.5 minutes and then, stirred for about 60 minutes. Herein, an aluminium content (e.g., amount) of the aluminium sulfate was designed to be 1.0 mol% based on 100 mol% of the total metal excluding lithium in a final positive electrode active material. When the stirring was completed, a supernatant of the mixed solution was confirmed to have pH 7.

After removing the solvent from the mixed solution with an aspirator and a filter press, a coated product (second dried product) was obtained through vacuum-drying at 190 °C.

The coated product was secondarily heat-treated at 710 °C under an oxygen atmosphere for 13 hours, preparing the final positive electrode active material.

### 2. Manufacturing of Rechargeable Lithium Battery Cell

97.7 wt% of the prepared positive electrode active material, 1.0 wt% of a polyvinylidene fluoride binder, and 1.3 wt% of a carbon nanotube conductive material were mixed to prepare a positive electrode active material layer slurry based on the 100 wt% of the positive electrode active material layer slurry, which was coated on an aluminium foil current collector and then, dried and compressed, thereby manufacturing a positive electrode. Herein, a loading level of the positive electrode active material layer was 20 mg/cm$^2$, and the compressed positive electrode had density of about 3.4 g/cc.

A negative electrode active material layer slurry was prepared by mixing 97.5 wt% of a graphite negative electrode active material, 1.5 wt% of carboxymethyl cellulose, and 1 wt% of styrene butadiene rubber in a water solvent based on the 100 wt% of the negative electrode active material layer slurry. The negative electrode active material layer slurry was coated on a copper foil current collector and then, dried and compressed, thereby manufacturing a negative electrode.

A polytetrafluoroethylene separator and an electrolyte solution prepared by dissolving 1 M $LiPF_6$ in a mixed solvent of ethylene carbonate and dimethyl carbonate in a volume ratio of 3:7 were used to manufacture a rechargeable lithium battery cell in a common method.

### Example 1-2

A positive electrode active material and a rechargeable lithium battery cell were manufactured in substantially the same manner as in Example 1-1 except that in preparing the positive electrode active material, the aluminium content (e.g., amount) of the aluminium sulfate was designed to be 1.5 mol% based on 100 mol% of the total metal excluding lithium of the final positive electrode active material.

### Example 2-1

A positive electrode active material and a rechargeable lithium battery cell were manufactured in substantially the same manner as in Example 1-1 except that $Ni_{0.95}Co_{0.04}Al_{0.01}(OH)_2$ and LiOH were mixed in a molar ratio of 1:1.03 and then, first heat-treated at 750 °C under an oxygen atmosphere for 15 hours to prepare a lithium nickel-based composite oxide having a composition of $Li_{1.03}Ni_{0.95}Co_{0.04}Al_{0.01}O_2$ in the form of secondary particles with an average particle diameter ($D_{50}$) of about 14 $\mu$m.

### Example 2-2

A positive electrode active material and a rechargeable lithium battery cell were manufactured in substantially the same manner as in Example 2-1 except that in preparing the positive electrode active material, the aluminium content (e.g., amount) of the aluminium sulfate was designed to be 1.5 mol% based on 100 mol% of the total metal excluding lithium of the final positive electrode active material.

### Comparative Example 1-1

$Ni_{0.91}Co_{0.075}Al_{0.015}(OH)_2$ and LiOH were mixed in a molar ratio of 1:1.03 and then, first heat-treated at 775 °C under an oxygen atmosphere for 15 hours to prepare lithium nickel-based composite oxide having a composition of $Li_{1.03}Ni_{0.91}Co_{0.075}Al_{0.015}O_2$ in the form of secondary particles with an average particle diameter ($D_{50}$) of about 14 $\mu$m.

The prepared lithium nickel-based composite oxide was mixed with aluminium oxide and then, heat-treated at 710 °C for 13 hours to prepare a final positive electrode active material. Herein, an aluminium content (e.g., amount) of the aluminium oxide was designed to be 0.5 mol% based on 100 mol% of the total metal excluding lithium in the final positive electrode active material.

A rechargeable lithium battery cell was manufactured in substantially the same manner as in Example 1-1.

**Comparative Example 1-2**

A positive electrode active material and a rechargeable lithium battery cell were manufactured in substantially the same manner as in Comparative Example 1-1 except that in preparing the positive electrode active material, the aluminium content (e.g., amount) of the aluminium oxide was designed to be 1.0 mol% based on 100 mol% of the total metal excluding lithium in the final positive electrode active material.

**Comparative Example 1-3**

A positive electrode active material and a rechargeable lithium battery cell were manufactured in substantially the same manner as in Example 1-1 except that in preparing the positive electrode active material, the aluminium content (e.g., amount) of the aluminium sulfate was designed to be 0.5 mol% based on 100 mol% of the total metal excluding lithium in the final positive electrode active material.

**Comparative Example 1-4**

A positive electrode active material and a rechargeable lithium battery cell were manufactured substantially in substantially the same manner as in Example 1-1 except that in preparing the positive electrode active material, the aluminium content (e.g., amount) of the aluminium sulfate was designed to be 2.0 mol% based on 100 mol% of the total metal excluding lithium in the final positive electrode active material.

**Comparative Example 2-1**

$Ni_{0.95}Co_{0.04}Al_{0.01}(OH)_2$ and LiOH were mixed in a molar ratio of 1:1.03 and then, first heat-treated at 750 °C under an oxygen atmosphere for 15 hours to prepare a lithium nickel-based composite oxide having a composition of $Li_{1.03}Ni_{0.95}Co_{0.04}Al_{0.01}O_2$ in the form of secondary particles with an average particle diameter ($D_{50}$) of about 14 $\mu$m.

The prepared lithium nickel-based composite oxide was mixed with aluminium oxide and then, heat-treated at 710 °C for 13 hours to prepare a final positive electrode active material. Herein, an aluminium content (e.g., amount) of the aluminium oxide was designed to be 0.5 mol% based on 100 mol% of the total metal excluding lithium in a final positive electrode active material.

A rechargeable lithium battery cell was prepared in substantially the same manner as in Example 1-1.

**Comparative Example 2-2**

A positive electrode active material and a rechargeable lithium battery cell were manufactured in substantially the same manner as in Comparative Example 2-1 except that in preparing the positive electrode active material, the aluminium content (e.g., amount) of the aluminium oxide was designed to be 1.0 mol% based on 100 mol% of the total metal excluding lithium in the final positive electrode active material.

**Comparative Example 2-3**

A positive electrode active material and a rechargeable lithium battery cell were manufactured in substantially the same manner as in Example 2-1 except that in preparing the positive electrode active material, the aluminium content (e.g., amount) of the aluminium sulfate was designed to be 0.5 mol% based on 100 mol% of the total metal excluding lithium in the final positive electrode active material.

**Comparative Example 2-4**

A positive electrode active material and a rechargeable lithium battery cell were manufactured in substantially the same manner as in Example 2-1 except that in preparing the positive electrode active material, the aluminium content (e.g., amount) of the aluminium sulfate was designed to be 2.0 mol% based on 100 mol% of the total metal excluding lithium in the final positive electrode active material.

**Comparative Example 2-5**

A positive electrode active material and a rechargeable lithium battery cell were manufactured in substantially the same manner as in Example 2-1 except that in preparing the positive electrode active material, the aluminium content (e.g., amount) of the aluminium sulfate was designed to be 3.0 mol% based on 100 mol% of the total metal excluding lithium in the final positive electrode active material.

**Comparative Example 2-6**

A positive electrode active material and a rechargeable lithium battery cell were manufactured in substantially the same manner as in Example 1-1 except that in preparing the positive electrode active material, the aluminium coating was not performed.

**Evaluation Example 1: Analysis of Surface of Positive Electrode Active Material**

The positive electrode active materials of the examples and the comparative examples were compared through scanning electron microscopy (SEM). SEM was performed by using Helios G4 HX under the conditions of HT: 3 kV, a current: 0.8 nA, and live time: 90s.

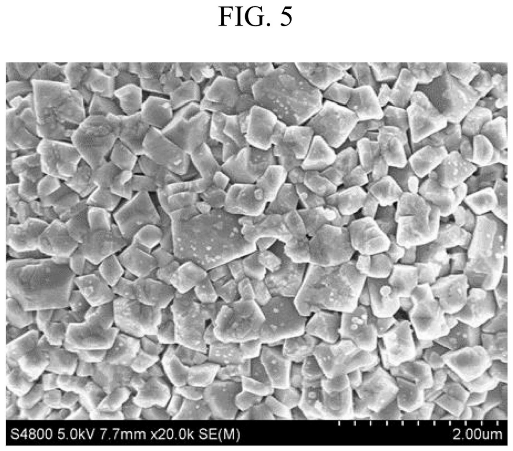

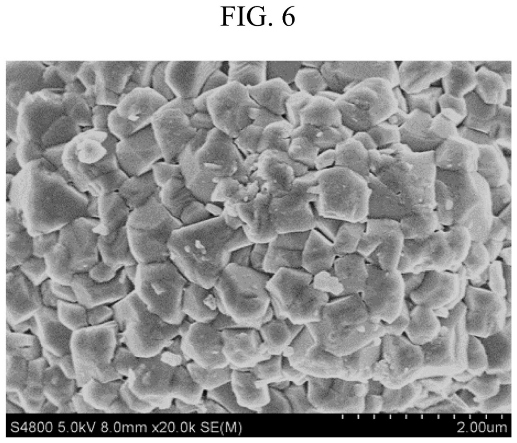

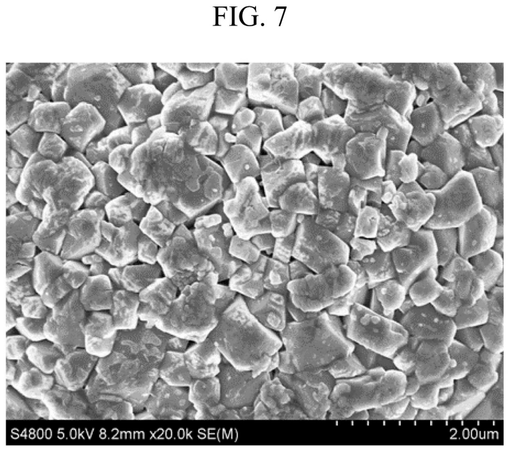

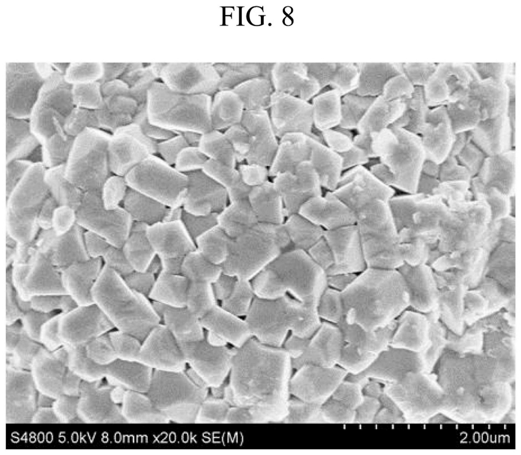

FIG. 5 is a SEM image of the surface of the final positive electrode active material prepared in Example 2-1. FIG. 6 is a SEM image of the surface of the final positive electrode active material prepared in Comparative Example 2-2. FIG. 7 is a SEM image of the surface of the final positive electrode active material prepared in Comparative Example 2-5. FIG. 8 is a SEM image of the surface of the final positive electrode active material prepared in Comparative Example 2-6.

Referring to FIGS. 5 to 8, on the surface of the final positive electrode active material of Example 2-1, a substantially uniform aluminium coating layer was formed, but on the surface of the final positive electrode active material of Comparative Example 2-2, whose coating layer had the same aluminium content (e.g., amount) as that of Example 2-1 but was formed through dry coating, a non-uniform coating layer was formed. In addition, on the surface of the final positive electrode active material of Comparative Example 2-5, an excessive aluminium coating layer was formed, and the surface of the final positive electrode active material of Comparative Example 2-6 was confirmed to be smooth without a coating layer.

**Evaluation Example 2: Analysis of Cross-section of Positive Electrode Active Material**

The positive electrode active materials of the examples were each cut with a focused ion beam (FIB) to check aluminium coating states through SEM-EDS mapping and TEM-EDS on the cross-section. SEM-EDS was performed by cross-section pretreatment by IM4000PLUS under the conditions of 6 kV, 40 minutes milling, and then using Helios G4 HX under the conditions of HT: 3 kV, a current: 0.8 nA, and live time: 90s. TEM-EDS was performed by using Helios G4 HX under the conditions of HT, 15 kV, and then Spectra 300 under the conditions of 200 kV.

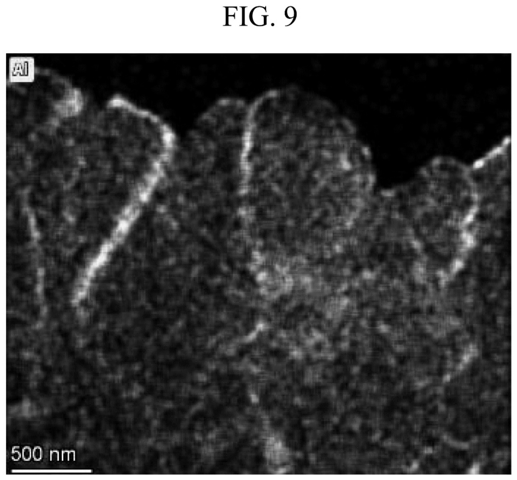

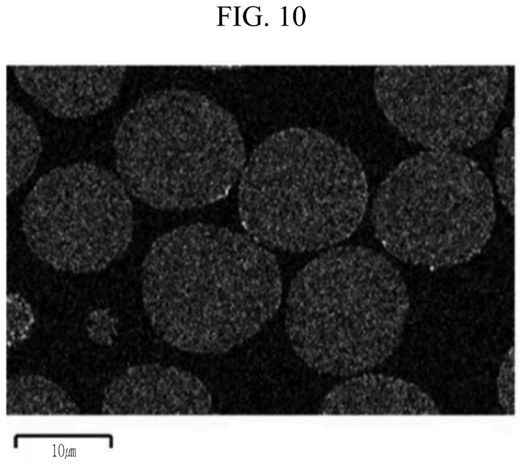

FIG. 9 is a TEM-EDS image showing aluminium in a cross-section of a positive electrode active material prepared in Example 2-1, and FIG. 10 is a SEM-EDS image showing aluminium in a cross-section of a positive electrode active material prepared in Comparative Example 2-2.

Referring to FIGS. 9 and 10, through the cross-section of the positive electrode active material of Example 2-1 which was subjected to wet coating, it was confirmed that an aluminium coating layer was clearly formed on the surface (grain boundary) of the primary particles forming the secondary particles. In contrast, through the cross-section of the positive electrode active material of Comparative Example 2-1 which was subjected to dry coating, it was confirmed that an aluminium coating layer was unevenly formed, and there was no coating layer at the grain boundaries.

**Evaluation Example 3: Analysis of Aluminium Content on Surface of Positive Electrode Active Material**

On the surface of each of the positive electrode active materials of the examples and the comparative examples, an aluminium content (e.g., amount) was analyzed through energy profiling energy dispersive spectroscopy, and the results are shown in Table 1. EP-EDS was performed by using Ultim (100 mm$^2$ detector) under the conditions of HT: 3 kV, a current: 0.8 nA, and live time: 90s.

Table 1

| | Al content when coating (mol%) | Al coating method | Al/ (Ni+Co+Al) |
|---|---|---|---|
| Example 1-1 | 1.0 | wet | 11.5 |
| Example 1-2 | 1.5 | | 13.8 |
| Comparative Example 1-1 | 0.5 | dry | 7.0 |
| Comparative Example 1-2 | 1.0 | | 8.9 |

(continued)

| | Al content when coating (mol%) | Al coating method | Al/ (Ni+Co+Al) |
|---|---|---|---|
| Comparative Example 1-3 | 0.5 | wet | 7.3 |
| Comparative Example 1-4 | 2.0 | | 15.7 |
| Example 2-1 | 1.0 | wet | 11.8 |
| Example 2-2 | 1.5 | | 13.9 |
| Comparative Example 2-1 | 0.5 | dry | 6.8 |
| Comparative Example 2-2 | 1.0 | | 8.8 |
| Comparative Example 2-3 | 0.5 | wet | 7.5 |
| Comparative Example 2-4 | 2.0 | | 16.0 |
| Comparative Example 2-5 | 3.0 | | 18.0 |
| Comparative Example 2-6 | 0 | | 3.1 |

Referring to Table 1, on the surface of each of the positive electrode active materials of the examples, it was confirmed that an aluminium content (e.g., amount) was in a range of 10 at% to 15 at% based on total 100 at% of nickel, cobalt, and aluminium. In contrast, on the surface of each of the positive electrode active materials of the comparative examples, it was confirmed that the aluminium content (e.g., amount) was in a range of less than 10 at% or greater than 15 at% based on total 100 at% of nickel, cobalt, and aluminium.

**Evaluation Example 4: Evaluation of Initial Charge/Discharge Capacity and Efficiency**

The rechargeable lithium battery cells of the examples and the comparative examples were each charged to an upper limit voltage of 4.25 V at a constant current of 0.2 C and to 0.05 C at the constant voltage and then, discharged to a cut-off voltage of 3.0 V at 0.2 C at 25 °C to perform initial charging and discharging. In Table 2, initial charge capacity (0.2 C charge capacity), initial discharge capacity (0.2 C discharge capacity), and a ratio (%) of the latter to the former as efficiency are shown.

**Evaluation Example 5: High-temperature Cycle-life Characteristics**

After the initial charging and discharging of Evaluation Example 4, the cells were each 50 times or more repeatedly charged and discharged within a voltage range of 3.0 V to 4.3 V at 1.0 C at 45 °C to calculate a ratio (high-temperature cycle-life characteristics) (%) of 50th cycle discharge capacity to the initial discharge capacity, which is shown in Table 2.

**Evaluation Example 6: High-temperature Storage Characteristics**

After the initial charging and discharging of Evaluation Example 4, the cells were each charged to an upper limit voltage of 4.3V at 0.2 C and to 0.05 C at the constant voltage at 75 °C and then, stored at the high temperature of 75 °C for 10 days, and then discharged to a cut-off voltage of 3.0V at 0.2 C at 25°C, obtaining discharge capacity after the 10 days' storage, to calculate a ratio (high-temperature storage characteristics) (%) of discharge capacity after the 10 days' storage to the initial discharge capacity, which is shown in Table 2.

Table 2

| | Al content when coating (mol%) | Al coating method | 0.2 C charge capacity (mAh /9) | 0.2 C discharge capacity (mAh /g) | Efficiency (%) | High-temperature cycle-life (%, 45 °C, 50 cyc) | High-temperature storage (%, 75 °C, 10 days) |
|---|---|---|---|---|---|---|---|
| Example 1-1 | 1.0 | wet | 232.5 | 203.1 | 87.4 | 84.4 | 93.1 |
| Example 1-2 | 1.5 | | 234.7 | 202.3 | 86.2 | 88.4 | 94.1 |

(continued)

| | Al content when coating (mol%) | Al coating method | 0.2 C charge capacity (mAh /9) | 0.2 C discharge capaci ty (mAh /g) | Effici ency (%) | High-tempera ture cycle-life (%, 45 °C, 50 cyc) | High-temperat ure storage (%, 75 °C, 10 days) |
|---|---|---|---|---|---|---|---|
| Comparative Example 1-1 | 0.5 | dry | 232.0 | 200.6 | 86.5 | 75.6 | 85.8 |
| Comparative Example 1-2 | 1.0 | | 231.2 | 199.7 | 86.4 | 79.2 | 88.2 |
| Comparative Example 1-3 | 0.5 | wet | 233.5 | 204.2 | 87.5 | 78.7 | 89.4 |
| Comparative Example 1-4 | 2.0 | | 232.4 | 199.2 | 85.7 | 90.5 | 94.8 |
| Example 2-1 | 1.0 | wet | 238.4 | 208.3 | 87.4 | 81.2 | 90.1 |
| Example 2-2 | 1.5 | | 240.7 | 207.5 | 86.2 | 84.8 | 91.2 |
| Comparative Example 2-1 | 0.5 | dry | 238.0 | 205.8 | 86.5 | 72.6 | 83.2 |
| Comparative Example 2-2 | 1.0 | | 237.4 | 205.0 | 86.4 | 76.2 | 85.7 |
| Comparative Example 2-3 | 0.5 | wet | 239.5 | 209.5 | 87.5 | 75.6 | 86.4 |
| Comparative Example 2-4 | 2.0 | | 237.9 | 203.9 | 85.7 | 85.1 | 92.5 |
| Comparative Example 2-5 | 3.0 | | 235.7 | 201.4 | 85.4 | 87.7 | 93.0 |
| Comparative Example 2-6 | 0 | | 242.5 | 212.0 | 87.4 | 71.8 | 82.1 |

Referring to Table 2, the examples were confirmed to concurrently (e.g., simultaneously) realize high initial charge/discharge capacity, high initial charge/discharge efficiency, excellent or suitable high-temperature cycle-life characteristics, and excellent or suitable high-temperature storage characteristics.

For example, Examples 1-1 and 1-2, compared to Comparative Examples 1-1 to 1-3, were confirmed to concurrently (e.g., simultaneously) realize high initial charge/discharge capacity, high initial charge/discharge efficiency, excellent or suitable high-temperature cycle-life characteristics, and excellent or suitable high-temperature storage characteristics. However, compared to Comparative Example 1-4, which exhibited superior high-temperature cycle-life characteristics and high-temperature storage characteristics to those of Examples 1-1 and 1-2, when $Li_{1.03}Ni_{0.91}Co_{0.075}Al_{0.015}O_2$ was used as a positive electrode active material, 0.2 C discharge capacity of 200 mAh/g or more should be secured for battery design at the conditions of Examples 1-1 and 1-2, but Comparative Example 1-4 was confirmed to exhibit 0.2 C discharge capacity of less than 200 mAh/g, which made the battery design impossible.

In addition, Examples 2-1 and 2-2, compared to Comparative Examples 2-1 to 2-3 and 2-6, were confirmed to concurrently (e.g., simultaneously) realize high initial charge/discharge capacity, high initial charge/discharge efficiency, excellent or suitable high-temperature cycle-life characteristics, and excellent or suitable high-temperature storage characteristics. However, compared to Comparative Examples 2-4 and 2-5 which exhibited superior high-temperature cycle-life characteristics and high-temperature storage characteristics to those of Examples 2-1 and 2-2, when $Li_{0.03}Ni_{0.95}Co_{0.04}Al_{0.01}O_2$ was used as a positive electrode active material, 0.2 C discharge capacity of 205 mAh/g or more should be secured at the conditions of Examples 2-1 and 2-2, but Comparative Examples 2-4 and 2-5 were confirmed to exhibit 0.2 C discharge capacity of less than 205 mAh/g, which made the battery design impossible.

For example, taken together, the results of Evaluation Examples 1 through 6 demonstrate that the positive electrode active materials of the present disclosure-particularly those prepared utilizing a wet coating method with an aluminium content in the range of about 10 at% to about 15 at% (based on Ni + Co + Al)-achieve a well-balanced combination of high initial capacity, high efficiency, and excellent durability under high-temperature and high-voltage conditions. In contrast, comparative examples with either insufficient or excessive aluminium content, or those employing dry coating methods, exhibited trade-offs such as reduced discharge capacity, non-uniform coating morphology, or diminished cycle-life and storage stability. These findings validate the importance of both the coating technique and compositional precision in achieving the desired electrochemical performance, and further support the suitability of the disclosed materials for use in high-performance rechargeable lithium batteries, including those for electric vehicles and energy storage systems.

As used herein, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, are also inclusive of the stated value and mean within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, ± 20%, ± 10%, or ± 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery (e.g., a negative electrode) manufacturing device, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While this disclosure has been described in connection with what is presently considered to be example embodiments, it is to be understood that the disclosure is not limited to the disclosed embodiments. In contrast, it is intended to cover one or more suitable modifications and equivalent arrangements included within the scope of the appended claims and equivalents thereof.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A positive electrode active material, comprising

   a plurality of core particles comprising a lithium nickel-based composite oxide having a nickel amount of at least 80 mol% based on 100 mol% of a total metal excluding lithium in the lithium nickel-based composite oxide; and a coating layer on a surface of each of the plurality of core particles, the coating layer comprising aluminium, wherein the plurality of core particles are each in a form of a secondary particle in which a plurality of primary particles is agglomerated, and
   wherein a surface of a positive electrode active material particle, comprising one of the plurality of core particles and its corresponding coating layer, has an aluminium content in a range of 10 at% to 15 at%, based on a total of 100 at% of nickel, cobalt, and aluminium, as measured by energy profiling energy dispersive spectroscopy.

2. The positive electrode active material as claimed in claim 1, wherein the lithium nickel-based composite oxide is represented by Chemical Formula 1:

   Chemical Formula 1 $\quad\quad Li_{a1}Ni_{x1}M^1_{y1}M^2_{z1}O_{2-b1}X_{b1}$,

   and wherein, in Chemical Formula 1, $0.9 \le a1 \le 1.8$, $0.8 \le x1 \le 1$, $0 \le y1 \le 0.2$, $0 \le z1 \le 0.2$, $0.9 \le x1+y1+z1 \le 1.1$, $0 \le b1 \le 0.1$, $M^1$ and $M^2$ are each independently one or more elements selected from among Al, B, Ba, Ca, Ce, Co, Cr, Cu, Fe, Mg, Mn, Mo, Nb, Si, Sn, Sr, Ti, V, W, Zn, Y, and Zr, $M^1$ and $M^2$ are different elements from each other, and X is one or more elements selected F, P, and S.

3. The positive electrode active material as claimed in claim 1 or claim 2, wherein,

   in the lithium nickel-based composite oxide,
   a cobalt amount, based on 100 mol% of a total metal excluding lithium, is at most 8 mol%.

4. The positive electrode active material as claimed in any one of claims 1 to 3, wherein

   the lithium nickel-based composite oxide further comprises aluminium, and
   wherein,
   in the lithium nickel-based composite oxide,
   an aluminium amount, based on 100 mol% of a total metal excluding lithium, is 1.0 mol% to 3.0 mol%.

5. The positive electrode active material as claimed in any one of claims 1 to 4, wherein
   an average particle diameter ($D_{50}$) of the plurality of core particles is 10 μm to 25 μm.

6. The positive electrode active material as claimed in any one of claims 1 to 5, wherein
   an aluminium amount in the coating layer, based on 100 mol% of a total metal excluding lithium in the positive electrode active material is 0.1 mol% to 2.0 mol%.

7. The positive electrode active material as claimed in any one of claims 1 to 6, wherein
   a ratio (Co/Al) of a cobalt molar amount to an aluminium molar amount in the positive electrode active material is 1.5 to 3.0.

8. The positive electrode active material as claimed in any one of claims 1 to 7, wherein

   the positive electrode active material further comprises a grain boundary coating portion comprising aluminium, which is on a surface of each of the primary particles inside the secondary particle, optionally wherein,
   in the grain boundary coating portion,
   a cobalt amount, based on 100 mol% of a total metal excluding lithium in the lithium nickel-based composite oxide, is at most 0.01 mol%.

9. The positive electrode active material as claimed in any one of claims 1 to 8, wherein
   an average crystal size of the primary particles measured by an X-ray diffraction analysis method is 10 nm to 300 nm.

10. A method for preparing a positive electrode active material, comprising

preparing core particles comprising a lithium nickel-based composite oxide;

adding the core particles to an aqueous solvent and mixing to prepare a first mixed solution, and removing the aqueous solvent to prepare a first dried product;

adding the first dried product to an aqueous solvent, and adding aluminium raw material thereto and mixing to prepare a second mixed solution; and

removing an aqueous solvent from the second mixed solution to prepare a second dried product and heat-treating the second dried product to form a coated product having a coating layer formed on a surface of each core particle.

11. The method as claimed in claim 10, wherein

the aluminium raw material is aluminium sulfate, aluminium nitrate, or a combination thereof.

12. The method as claimed in claim 10 or claim 11, wherein

a pH of a supernatant of the second mixed solution is 5.5 to 7.5.

13. A positive electrode, comprising:

a current collector; and

a positive electrode active material layer on the current collector,

wherein the positive electrode active material layer comprises the positive electrode active material as claimed in any one of claims 1 to 9.

14. The positive electrode as claimed in claim 13, wherein:

(i) a loading level of the positive electrode active material layer is 10 mg/cm$^2$ to 30 mg/cm$^2$; and/or

(ii) a density of the positive electrode active material layer is 3.2 g/cc to 3.6 g/cc.

15. A rechargeable lithium battery, comprising:

the positive electrode as claimed in claim 13 or claim 14;

a negative electrode; and

an electrolyte.

# FIG. 1

# FIG. 2

# FIG. 3

# FIG. 4

# FIG. 5

S4800 5.0kV 7.7mm x20.0k SE(M)                    2.00um

# FIG. 6

S4800 5.0kV 8.0mm x20.0k SE(M)  2.00um

FIG. 7

S4800 5.0kV 8.2mm x20.0k SE(M)          2.00um

FIG. 8

S4800 5.0kV 8.0mm x20.0k SE(M)          2.00um

## FIG. 9

FIG. 10

10μm

Europäisches
Patentamt
European
Patent Office
Office européen
des brevets

# EUROPEAN SEARCH REPORT

Application Number

EP 25 20 6185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 842 117 A (SUNWODA ELECTRIC VEHICLE CELL CO LTD) 24 March 2023 (2023-03-24) * paragraph [0043]; claims; example 1 * ----- | 1-15 | INV. C01G53/42 C01G53/84 H01M4/525 |
| A | EP 3 652 113 B1 (TODA KOGYO CORP [JP]) 20 September 2023 (2023-09-20) * examples 1,2 * ----- | 1-15 | |
| A | JP 2019 040844 A (SUMITOMO METAL MINING CO) 14 March 2019 (2019-03-14) * paragraphs [0023], [0058] - [0061], [0078], [0079] * ----- | 1-15 | |
| A | EP 4 382 489 A1 (SAMSUNG SDI CO LTD [KR]) 12 June 2024 (2024-06-12) * paragraphs [0031], [0104]; claims * ----- | 1-15 | |

TECHNICAL FIELDS
SEARCHED (IPC)

C01G
H01M

The present search report has been drawn up for all claims

| Place of search | Date of completion of the search | Examiner |
|---|---|---|
| Munich | 6 March 2026 | Nobis, Barbara |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 6185

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2026

| Patent document cited in search report | | Publication date | Patent family member(s) | | Publication date |
|---|---|---|---|---|---|
| CN 115842117 | A | 24-03-2023 | NONE | | |
| EP 3652113 | B1 | 20-09-2023 | CN | 110785380 A | 11-02-2020 |
| | | | EP | 3652113 A1 | 20-05-2020 |
| | | | ES | 2961786 T3 | 13-03-2024 |
| | | | HU | E064235 T2 | 28-02-2024 |
| | | | JP | 7148874 B2 | 06-10-2022 |
| | | | JP | 2020526894 A | 31-08-2020 |
| | | | KR | 20200029397 A | 18-03-2020 |
| | | | PL | 3652113 T3 | 18-03-2024 |
| | | | US | 2020119342 A1 | 16-04-2020 |
| | | | US | 2020185708 A1 | 11-06-2020 |
| | | | WO | 2019012497 A1 | 17-01-2019 |
| JP 2019040844 | A | 14-03-2019 | JP | 6969228 B2 | 24-11-2021 |
| | | | JP | 2019040844 A | 14-03-2019 |
| EP 4382489 | A1 | 12-06-2024 | CA | 3220171 A1 | 07-06-2024 |
| | | | EP | 4382489 A1 | 12-06-2024 |
| | | | JP | 7779889 B2 | 03-12-2025 |
| | | | JP | 2024082232 A | 19-06-2024 |
| | | | US | 2024204186 A1 | 20-06-2024 |

EPO FORM P0459

For more details about this annex : see Official Journal of the European Patent Office, No. 12/82